# EUROPEAN PATENT SPECIFICATION

(11) **EP 2 321 080 B1**
(45) Date of publication and mention of the grant of the patent: **12.08.2015**
(21) Application number: 09757260.6
(22) Date of filing: 02.06.2009
(51) Int. Cl.: B23B 51/08, B23B 51/10

(54) **A CUTTING TOOL**
SCHNEIDWERKZEUG
OUTIL DE COUPE

(30) Priority: 06.06.2008 IE 20080463
(43) Date of publication of application: 18.05.2011
(73) Proprietor: UNIVERSITY COLLEGE DUBLIN, Dublin 4 (IE)
(72) Inventor: BYRNE, Gerald, County Wicklow (IE); STRINGER, Peter, County Wicklow (IE); AHEARNE, Eamonn, County Meath (IE)
(74) Representative: O'Neill, Brian
(86) International application number: PCT/EP2009/003917
(87) International publication number: WO 2009/146877

(56) References cited:
- EP-A- 1 541 268
- WO-A-2004/093637
- US-A- 3 540 324
- US-A- 4 333 727

## Description

### Field of the invention

The present invention relates to a cutting tool, and in particular a cutting tool comprising a drill bit having an integrated deburring tool or tip in order to enable both drilling and deburring operations to be carried out using a single tool.

### Background of the invention

Depending on the material being worked with, most drilling operations will result in the formation of a burr as the drill bit exits the far side of a workpiece. The size and shape f the burr will vary depending on the material through which the drill is passed, and the speed of the drilling operation, in addition to other operating conditions such as the use or otherwise of a coolant, etc. For example when drilling through aluminium, a significant burr will normally form on the rear-side of the workpiece, whereas drilling through cast iron will leave a relatively small burr. It is necessary, in most cases, to remove such burrs as they can cause personal injury, produce high local stresses, damage contiguous components, for example electrical wires, increase wear, and if they come loose or break away from the work piece, may cause damage to surrounding components, for example seals or moving parts.

Conventionally most deburring is done manually using a scraper tool to remove the burr, or as a separate process using abrasive particles to blast off the burrs, or using heat and/or chemicals. Manual deburring adds to the cost of a part in two ways. Firstly it increases the production time of the part and there is also an associated labour cost. In addition, separate processes involve a significant investment in dedicated finishing machines while also increasing production time by adding to the number of steps involved in the production process. In addition it may not always be possible or practical to access the exit hole of the bore around which the burr is formed, as the drilling operation may be carried on a component already fitted to one or more additional components, whereby the rear of the workpiece is not immediately accessible for deburring.

WO2004093637 discloses a tool having a deployable cutting blade for making an undercut in a substrate is disclosed. The tool has a chamber positioned between its cutting tip and its tang. The cutting blade is movably mounted within the chamber. The blade is movable by sliding, pivoting or deflecting.

The present invention has therefore been developed in order to overcome the above mentioned problems.

### Summary of the invention

The present invention therefore provides a cutting tool according to claim 1.

Preferably, the deburring tool is freely displaceable between the extended and retracted positions.

Preferably, the deburring tool is mounted on the drill bit at a position which enables the deburring tool to be displaced between the extended and retracted positions, during rotation of the cutting tool, solely by centrifugal force.

Preferably, the deburring tool is pivotally mounted to the drill bit.

Preferably, the deburring tool is at least partially housed within the recess when in the retracted position.

Preferably, the deburring tool comprises a cutting head and an axle fixed to or formed integrally with the cutting head, on which axle the deburring tool is pivotable between the retracted and extended positions.

Preferably, the cutting tool comprises a frame secured to the drill bit and securing the deburring tool to the drill bit.

Preferably, the frame defines a bearing for the axle of the deburring tool.

Preferably, the deburring tool is releasably retained on the drill bit.

Preferably, the deburring tool and/or drill bit is adapted to induce an airflow past the deburring tool to aid in displacement of the deburring tool between the retracted and extended positions.

Preferably, the axle comprises at least one end which is shaped to reduce friction between the axle and a surface with which the axle is in contact with.

Preferably, the at least one end of the axle is substantially hemispherical.

Preferably, the deburring tool is shaped and dimensioned to generate, in response to the relative displacement of air past the deburring tool during rotation of the cutting tool, an aerodynamic force acting to displace the deburring tool towards the extended position.

As used herein, the term "deburring" is intended to mean the removal of a burr from around the edge of a hole drilled in a workpiece, the burr normally forming around the exit side of the hole with respect to the drill bit or other cutting tool which forms the hole, although it is also intended to cover the possibility of profiling the edge of the hole, whether or not a burr is initially present, for example by chamfering or countersinking the edge of the hole.

### Brief description of the drawings

Figure 1 illustrates a perspective view of a cutting tool according to an embodiment of the present invention, with a deburring tool, forming part of the cutting tool, in a retracted position;
Figure 2 illustrates an alternative perspective view of the cutting tool of Figure 1;
Figure 3 illustrates a perspective view of the cutting tool, with the deburring tool in an extended position;
Figure 4 illustrates an alternative perspective view of the cutting tool with the deburring tool in the extended position;
Figure 5 illustrates an exploded perspective view of the cutting tool shown in Figures 1 to 4; and
Figure 6 illustrates a perspective view of a deburring tooling forming part of the cutting tool of the present invention, in isolation from the cutting tool in order to reveal the shape and configuration of the entire deburring tool.

### Detailed description of the drawings

Referring now to the accompanying drawings, there is illustrated a cutting tool, generally indicated as 10, which is adapted to enable both drilling and deburring operations to be carried out with this single tool 10. The cutting tool 10 comprises a drill bit 12 which is substantially conventional in form, but which has a deburring tool 14 mounted thereon. The cutting tool 10 therefore allows a hole to be drilled in a work piece in conventional fashion using the drill bit 12 and to allow the hole to be deburred using the deburring tool 14, as will be described in detail hereinafter. It will be appreciated from the following description of the configuration and operation of the cutting tool 10 that the drill bit 12 may be of any suitable form, and may be manufactured from any one or more materials, and is in the embodiment illustrated shown as a twist drill simply for illustrative purposes, and manufactured from high speed steel (HSS). Similarly, the exact shape and configuration of the deburring tool 14 may be altered, once the underlying functionality thereof is retained, as is described in detail hereinafter.

The drill bit 12 comprises an end face 16 which defines the cutting edges of the drill bit 12, and a pair of flutes 18 which extend back along the drill bit 12 from the end face 16 in conventional fashion. In use these flutes 18 carry swarf, and possible a coolant if employed, away from the end face 16. As mentioned above the drill bit 12 may be formed from any suitable material, the most common of which is high speed steel. The drill bit 12 may in addition be provided with one or more cutting inserts, for example formed from tungsten carbide or the like, without altering the underlying invention, namely the provision of the deburring tool 14 within the cutting tool 10.

The drill bit 12 further comprises a recess 20 located in relatively close proximity to the end face 16, and which is preferably machined into the drill bit 12, although it will be appreciated that the recess 20 could be formed integrally with the drill bit 12 during the manufacture thereof. The recess 20 is shaped and dimensioned to house the deburring tool 14 therein, and in the embodiment illustrated is shaped and dimensioned to also accept a frame 22 therein, which frame 22 is adapted, as will be described hereinafter, to retain the deburring tool 14 in position on the drill bit 12, and to allow the deburring tool 14 to be displaced between retracted and extended positions.

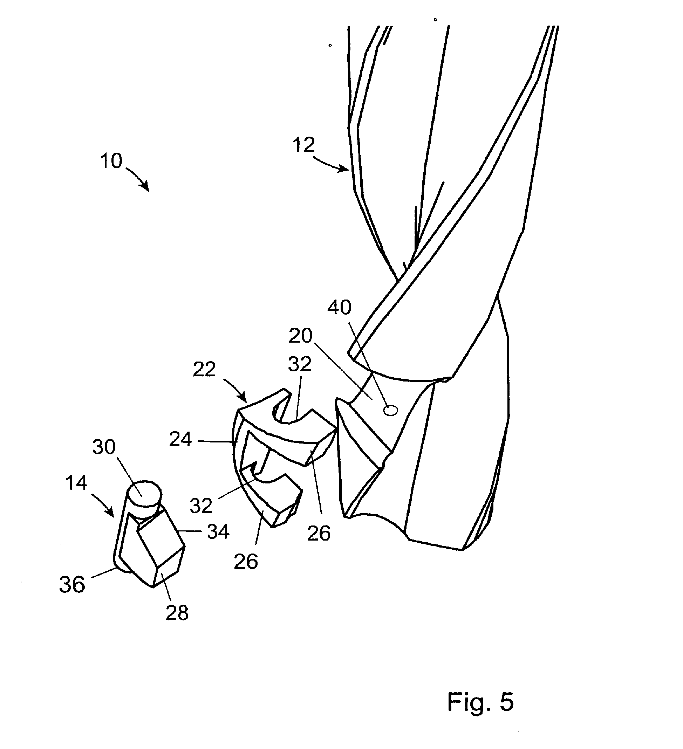

Referring in particular to Figure 5 it can be seen that the frame 22 is substantially "C" shaped, and comprises a rear wall 24 and a pair of end walls 26. It can also be seen from Figure 5 that the deburring tool 14 comprises a cutting head 28 and an axle 30 which is secured to, and preferably formed integrally with, the cutting head 28. The axle 30 projects beyond the cutting head 28 on either side thereof. The frame 22, and in particular the pair of end walls 26, define a pair of openings 32 for receiving the ends of the axle 30, the pair of openings 32 thus defining a bearing for the axle 30. As described hereinafter, the openings 32 serve both to secure the deburring tool 14 in position on the drill bit 12 within the recess 20, and to allow the deburring tool 14 to be displaced between extended and retracted positions as described below.

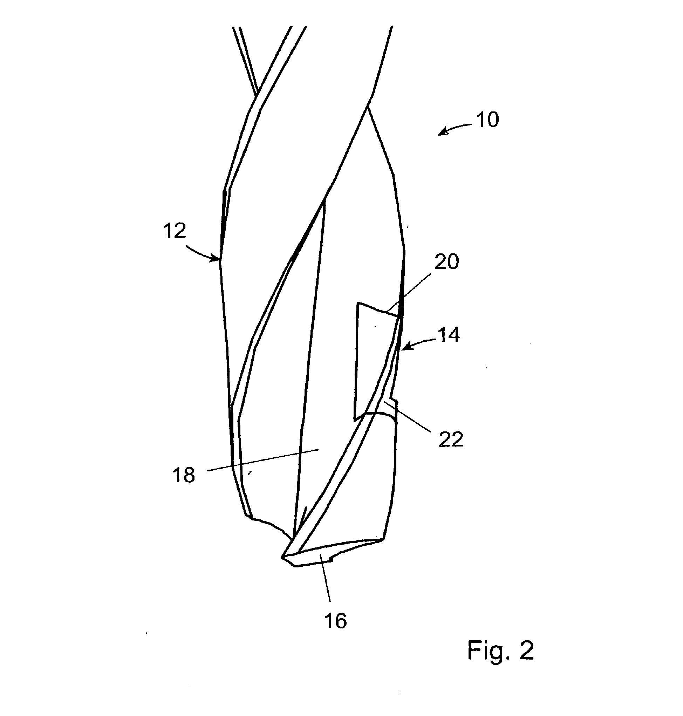

The deburring tool 14 is first located within the frame 22 such that the ends of the axle 30 are seated within the openings 32. The frame 22 is then secured within the recess 20 by any suitable means, for example bonding, welding or laser welding, or any other suitable alternative. The frame 22 could also be dimensioned to have an interference fit with the recess 20 in order to be a press fit therewith. As seen from the accompanying drawings, the frame 22 is shaped and dimensioned such that when seated and secured within the recess 20 the outer surfaces of the frame 22 provide a smooth transition between the surfaces of the drill bit 12, in particular the flutes 18, and the frame 22. This is particularly apparent from Figure 2, in which it can be seen that the frame 22 does not provide any interruption along the working surface of the flutes 18, thus allowing the unhindered transfer of swarf and other material upwardly away from the end face 16 of the drill bit 12 during use. It may also be preferable to form the frame 22 from the same material as the drill bit 12, or at least a material having a similar coefficient of thermal expansion, in order to avoid or minimise deformation of the frame 22 as a result of the heat generated during use of the cutting tool 10. If the frame 22 were to have a significantly different coefficient of thermal expansion to the drill bit 12 then the frame 22 could conceivably deform during heating of the cutting tool 10 due to different rates of expansion between the frame 22 and the drill bit 12. This could lead to a loss in performance of the cutting tool 10, for example if deformation of the frame 22 were to lead to binding with the axle 30, thereby preventing the extension and/or retraction of the deburring tool 14 relative to the drill bit 12.

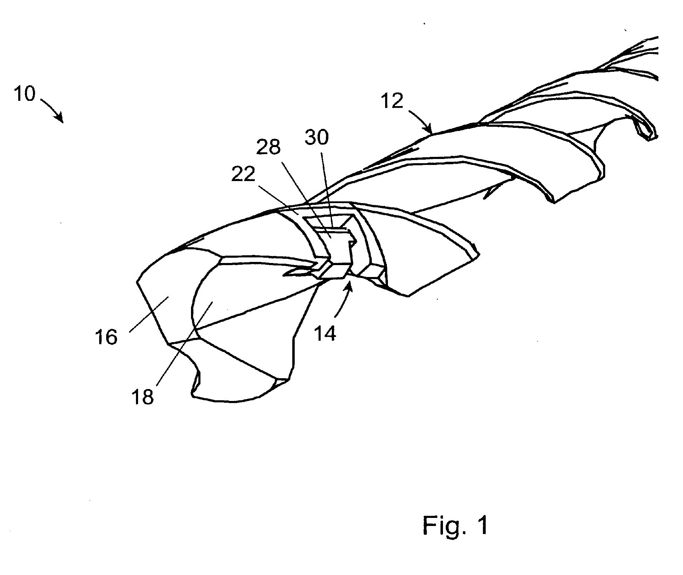

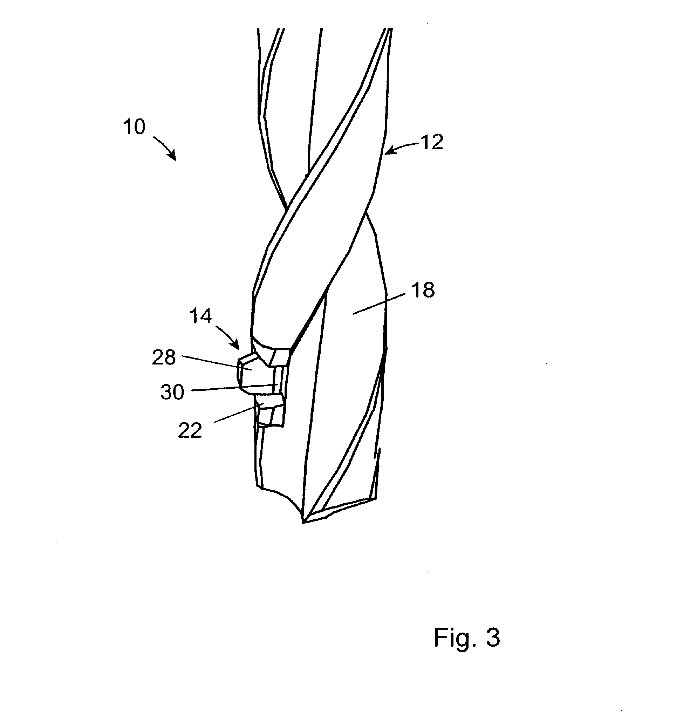

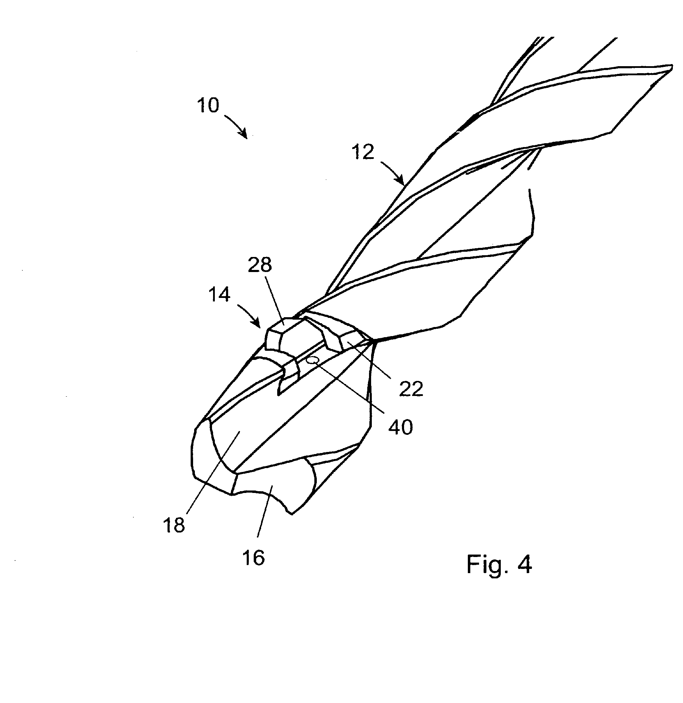

The frame 22 allows the deburring tool 14 to be pivotally mounted to the drill bit 12. As a result the deburring tool 14, and in particular the cutting head 28 thereof, is displaceable between a retracted position as illustrated in Figure 1, and an extended position as illustrated in Figures 3 and 4. The deburring tool 14 is freely pivotable between these positions, avoiding the requirement for a spring or other biasing means to affect the extension and/or retraction thereof. When in the retracted position, the deburring tool 14 is fully contained within the recess 20 and thus does not interfere with the drilling operation of the drill bit 12.

Referring to Figures 3 and 4, when in the extended position the cutting head 28 of the deburring tool 14 projects outwardly beyond the outer circumference of the drill bit 12. This allows the cutting head 28 to be used in deburring the edges of a hole just formed by the drill bit 12, as will be described in detail below.

Turning then to the operation of the cutting tool 10, the drill bit 12 is mounted in a chuck or any other suitable alternative, in preparation for boring a hole in a work piece (not shown). The drill bit 12 is then driven in a clockwise direction and advanced into the work piece in order to begin drilling. The orientation of the frame 22 and deburring tool 14 is such that during clockwise rotation of the drill bit 12, centrifugal force retains the deburring tool 14 in the retracted position. In addition, the surfaces of the deburring tool 14, and in particular the cutting head 28, are shaped such that during the clockwise rotation of the drill bit 12 the cutting head 28 will be returned to the retracted position should the cutting head 28 come into contact with the workpiece (not shown). This is achieved by having the cutting head 28 trailing the axle 30 with respect to the direction of rotation of the drill bit 12. The deburring tool 14 is thus configured as a "trailing arm" during the drilling operation, and then as a "leading arm" when the direction of rotation of the drill bit 12 is reversed in order to perform the deburring operation.

Once the hole has been drilled, the drill bit 12 is advanced through the hole a distance which ensures that the deburring tool 14 has passed the rear side of the hole formed in the work piece (not shown). At this point the direction of rotation of the drill bit 12 is reversed. The resultant centrifugal force acting on the deburring tool 14 causes the deburring tool 14 to pivot on the axle 30 into the extended position, as illustrated in Figures 3 and 4. The drill bit 12 is then retracted upwardly through the hole in the work piece until a cutting edge 34 of the cutting head 28 begins to contact the burr formed on the rear side of the hole. Further upward displacement of the drill bit 12 will thus effect deburring of the hole. The face of the deburring tool 14 which defines the cutting edge 34 may be oriented to provide a desired rake angle for the cutting edge, which may be selected to suit the type of material being machined, to provide desired chip flow characteristics, or to suit other machining parameters such as the speed of cut, etc. In addition, the rake angle may be varied depending on the material used to form the deburring tool 14, with the possibility of either a positive or negative rake angle. The cutting head 28 may also be shaped and/or dimensioned such that it can be used to produce a defined shape on the edge of the hole, for example to chamfer or countersink the edge of the hole.

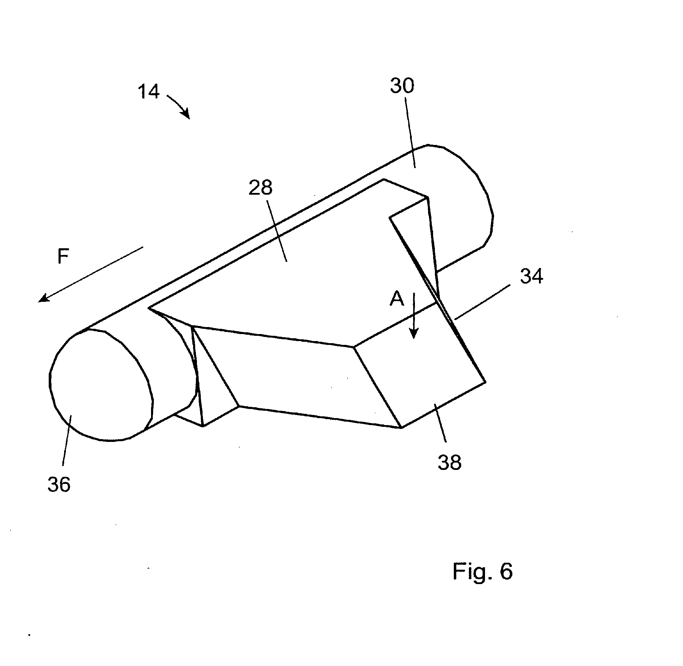

During the deburring operation the cutting edge 34 is in contact with the workpiece, and it will therefore be appreciated that there will be a reactive force acting in a direction substantially parallel with a longitudinal axis of the axle 30 of the deburring tool 14, as indicated by the arrow F shown in Figure 6. This force F will tend to press an end 36 of the axle 30 into contact with the respective surface of the recess 20 in the drill bit 12. The end 36 is therefore preferably profiled to reduce friction between the end 36 and the contacted surface of the recess 20, and in the embodiment illustrated the end 36 is substantially hemispherical is shaped. This will reduce the contact area or footprint between the axle 30 and the contacted surface of the recess 20, thus reducing friction and therefore reducing the force necessary to extend and retract the deburring tool 14. It will be appreciated that the shape of the end 36 may be varied once the above functionality is maintained.

Once deburring is complete, rotation of the drill bit 12 is again reversed, whereby the centrifugal force acting on the deburring tool 14 forces the deburring tool 14 back into the retracted position. This then allows the drill bit 12 to be fully retracted from the now deburred hole.

The deburring tool 14 may be formed from any suitable material, for example high speed steel, carbide, cubic borne nitride, diamond or any other suitable material. The deburring tool 14 could also be formed from one material having a hardened coating of an alternative material thereon. Similarly, the frame 22 may be formed from any suitable material, and may also be formed such as to be releasably securable within the recess 20 thereby allowing repair or replacement of the deburring tool 14.

It will also be appreciated that the frame 22 could be omitted from the cutting tool 10. In such an embodiment it would then be necessary to mount the deburring tool 14 directly to the drill bit 12. This could involve the formation of a bore extending from the end face 16, upwardly through the drill bit 12 and across the recess 20, into which could then be inserted a pin to retain the deburring tool 14 in position. The axle 30 would then have to be omitted from the deburring tool 14 and instead a suitably dimensioned hole formed therein to receive the pin. This is however a less preferred embodiment, as the techniques required to form the bore from the end face 16 and across the recess 20 are complex and therefore time consuming and expensive. In addition, the combined absence of the axle 30 from the deburring tool 14 and the resultant requirement to provide a hole in the deburring tool 14 for receiving the pin, could result in a significant weakening of the deburring tool 14. This is particularly significant when producing the cutting tool 10 on a scale where the drill bit 12 has a diameter in the range of 2mm to 5 mm. In such sizes the deburring tool 14 is extremely small and therefore is more likely to be susceptible to damage during operation. The provision of the integrally formed axle 30 in the embodiment illustrated provides significant strength to the deburring tool 14.

It is preferable that the frame 22 and the deburring tool 14 maintain, as closely as possible, the surface shape of the drill bit 12. However, certain features or surface formations both on the drill bit 12 and/or the frame 22 may be provided such as to initially induce an air flow past the deburring tool 14 which will generate an aerodynamic force to compliment the centrifugal force acting to displace the deburring tool 14 between the extended and retracted positions. Thus these features or surface formations (not shown) may generate an air flow to displace the deburring tool 14 into the extended position when the cutting tool 14 is rotated in an anti-clockwise direction, and similarly may generate an aerodynamic force to hold the deburring tool 14 in the retracted position when the tool 10 is rotating in a clockwise direction.

Referring in particular to Figure 6, in the embodiment illustrated the deburring tool 14 comprises an end face 38 on the opposite side of the tool 14 to the axle 30. The end face 38 is swept inwardly at an angle to the direction of the airflow A past the tool 14 during deburring rotation of the cutting tool 10. In this way, when the deburring tool 14 is initially in the retracted position, and the cutting tool 10 begins to rotate in the deburring direction, the end face 38 will be caught by the airflow A, and will thus generate a force acting to pivot the deburring tool 14 towards the extended position. As the end face 38 is the furthest distance on the deburring tool 14 from the axle 30 the turning moment about the axle 30 is maximised. This will thus act to displace the deburring tool 14 into the extended position, thereby complimenting the centrifugal force acting on the deburring tool 14, increasing the speed at which the deburring tool 14 is displaced into the extended position. This increase in speed may be significant when dealing with computer controlled drilling/deburring operations, which can be carried out at very high speeds, and for which even minor increases in the speed of extension of the deburring tool 14 can reduce the time taken to complete the drilling/deburring operation.

In addition, the design of the cutting tool 10, and in particular the surfaces surrounding the deburring tool 14, may be such as to reduce surface tension effects between the deburring tool 14 and the drill bit 12, and therefore aid in the displacement of the deburring tool 14 into the extended position. According to the invention a protrusion or stop 40 is provided on the surface of the recess 20 against which the deburring tool 14 lies when in the retracted position. This stop will thus prevent the respective surface of the deburring tool 14 from lying completely flat against the corresponding surface of the recess 20, which could result in significant surface tension between the deburring tool 14 and the drill bit 12 which could reduce the speed at which the deburring tool 14 was able to pivot outwardly from the retracted position. By raising the deburring tool 14 slightly off the surface of the recess 20 airflow may also be able to enter the gap created, thus aiding in the aerodynamic opening of the deburring tool 14. The stop 40 could be provided in any number of ways, for example by applying a small bead of weld to the surface of the drill bit 12. Alternatively the stop 40 could be provided on the face of the deburring tool 14 which lies against the drill bit 12, and again could be provided after the deburring tool 14 is manufactured, or could be formed integrally therewith during the manufacturing process.

As mentioned above, the cutting tool 10 may be of numerous shapes and configurations, and in particular the configuration of the drill bit 12 may be modified as required. It is also envisaged that the cutting tool 10 could be provided without a shank (not shown) for the drill bit 12, and may be subsequently secured to a suitable shank, for example by friction welding or any other suitable means. The cutting tool 10 may also comprise more than one of the deburring tools 14, for example a pair of the deburring tools 14 on opposite sides of the drill bit 12.

It will thus be appreciated that the cutting tool 10 of the present invention provides a simple yet effective means of achieving the drilling and deburring of a hole in a workpiece using a single tool. The cutting tool 10 has only a single moving part, namely the deburring tool 14, which does not require any additional components such as springs or other biasing means to achieve either extension or retraction of the deburring tool, again improving the simplicity and therefore reliability of the cutting tool 10.

The use of springs or the like to achieve extension and/or retraction of the deburring tool would add complexity to the cutting tool 10, and would be likely to increase the possibility of swarf or other debris becoming lodging in the workings of the tool, hindering the performance thereof. In addition, particularly with drill bits of smaller dimension, for example in the range 2mm to 10mm in diameter, the machining requirements to add springs or other mechanism would be extremely onerous and thus expensive. The cutting tool 10 of the present invention avoids the above mentioned problems due to the design and features described above.

## Claims

1. A cutting tool (10) comprising a drill bit (12); and a deburring tool (14) mounted to the drill bit and displaceable between a retracted position and an extended position; **characterised in that** the tool comprises a stop (40) adapted to reduce or eliminate surface tension between the deburring tool and the drill bit when the deburring tool is in the retracted position, the stop being provided as a protrusion (40) on the surface of a recess (20) in the drill bit against which the deburring tool (14) lies when in the retracted state.

2. A cutting tool according to claim 1 in which the deburring tool is freely displaceable between the extended and retracted positions.

3. A cutting tool according to claim 1 or 2 in which the deburring tool is mounted on the drill bit at a position which enables the deburring tool to be displaced between the extended and retracted positions, during rotation of the cutting tool, solely by centrifugal force.

4. A cutting tool according to any preceding claim in which the deburring tool is pivotally mounted to the drill bit.

5. A cutting tool according to any preceding claim in which the deburring tool is at least partially housed within the recess when in the retracted position.

6. A cutting tool according to any preceding claim in which the deburring tool comprises a cutting head (28) and an axle (30) fixed to or formed integrally with the cutting head, on which axle the deburring tool is pivotable between the retracted and extended positions.

7. A cutting tool according to any preceding claim comprising a frame (22) secured to the drill bit and securing the deburring tool to the drill bit.

8. A cutting tool according to claim 7 in which the frame defines a bearing for the axle of the deburring tool.

9. A cutting tool according to any preceding claim in which the deburring tool is releasably retained on the drill bit.

10. A cutting tool according to any preceding claim in which the deburring tool and/or drill bit is adapted to induce an airflow past the deburring tool to aid in displacement of the deburring tool between the retracted and extended positions.

11. A cutting tool according to any of claims 6 to 10 in which the axle comprises at least one end (36) which is shaped to reduce friction between the axle and a surface with which the axle is in contact with.

12. A cutting tool according to claim 11 in which the at least one end (36) of the axle is substantially hemispherical.

13. A cutting tool according to any preceding claim in which the deburring tool is shaped and dimensioned to generate, in response to the relative displacement of air past the deburring tool during rotation of the cutting tool, an aerodynamic force acting to displace the deburring tool towards the extended position.

## Patentansprüche

1. Schneidwerkzeug (10), umfassend eine Bohrspitze (12); und ein Entgratungswerkzeug (14), das an der Bohrspitze angebracht ist und zwischen einer eingefahrenen Stellung und einer ausgefahrenen Stellung verschiebbar ist; **dadurch gekennzeichnet, dass** das Werkzeug einen Anschlag (40) umfasst, der dazu angepasst ist, die Oberflächenspannung zwischen dem Entgratungswerkzeug und der Bohrspitze zu verringern oder zu beseitigen, wenn sich das Entgratungswerkzeug in der eingefahrenen Stellung befindet, wobei der Anschlag als Vorsprung (40) auf der Oberfläche einer Aussparung (20) in der Bohrspitze vorgesehen ist, an dem das Entgratungswerkzeug (14) anliegt, wenn es sich im eingefahrenen Zustand befindet.

2. Schneidwerkzeug nach Anspruch 1, wobei das Entgratungswerkzeug zwischen der ausgefahrenen und der eingefahrenen Stellung frei verschiebbar ist.

3. Schneidwerkzeug nach Anspruch 1 oder 2, wobei das Entgratungswerkzeug an einer Stelle an der Bohrspitze angebracht ist, die ermöglicht, dass das Entgratungswerkzeug während der Drehung des Schneidwerkzeugs lediglich durch Zentrifugalkraft zwischen der ausgefahrenen und der eingefahrenen Stellung verschoben werden kann.

4. Schneidwerkzeug nach einem der vorangehenden Ansprüche, wobei das Entgratungswerkzeug schwenkbar an der Bohrspitze angebracht ist.

5. Schneidwerkzeug nach einem der vorangehenden Ansprüche, wobei das Entgratungswerkzeug mindestens teilweise in der Aussparung untergebracht ist, wenn es sich in der eingefahrenen Stellung befindet.

6. Schneidwerkzeug nach einem der vorangehenden Ansprüche, wobei das Entgratungswerkzeug einen Schneidkopf (28) und eine an dem Schneidkopf befestigte oder einstückig damit ausgebildete Achse (30) umfasst, wobei das Entgratungswerkzeug auf dieser Achse zwischen der eingefahrenen und der ausgefahrenen Stellung schwenkbar ist.

7. Schneidwerkzeug nach einem der vorangehenden Ansprüche, umfassend einen Rahmen (22), der an der Bohrspitze befestigt ist und das Entgratungswerkzeug an der Bohrspitze befestigt.

8. Schneidwerkzeug nach Anspruch 7, wobei der Rahmen ein Lager für die Achse des Entgratungswerkzeugs definiert.

9. Schneidwerkzeug nach einem der vorangehenden Ansprüche, wobei das Entgratungswerkzeug lösbar an der Bohrspitze gehalten wird.

10. Schneidwerkzeug nach einem der vorangehenden Ansprüche, wobei das Entgratungswerkzeug und/oder die Bohrspitze dazu angepasst ist, einen Luftstrom an dem Entgratungswerkzeug vorbei hervorzurufen, um das Verschieben des Entgratungswerkzeugs zwischen der eingefahrenen und der ausgefahrenen Stellung zu unterstützen.

11. Schneidwerkzeug nach einem der Ansprüche 6 bis 10, wobei die Achse mindestens ein Ende (36) umfasst, das dazu geformt ist, die Reibung zwischen der Achse und einer Oberfläche, die die Achse berührt, zu verringern.

12. Schneidwerkzeug nach Anspruch 11, wobei das mindestens eine Ende (36) der Achse im Wesentlichen halbkugelförmig ist.

13. Schneidwerkzeug nach einem der vorangehenden Ansprüche, wobei das Entgratungswerkzeug dazu geformt und bemessen ist, als Reaktion auf die relative Verschiebung von Luft an dem Entgratungswerkzeug vorbei, während der Drehung des Schneidwerkzeugs, eine aerodynamische Kraft zu erzeugen, die wirkt, um das Entgratungswerkzeug zu der ausgefahrenen Stellung hin zu verschieben.

## Revendications

1. Outil de coupe (10) comportant une mèche (12) ; et un outil d'ébavurage (14) monté sur la mèche et en mesure de se déplacer entre une position rétractée et une position étendue ; **caractérisé en ce que** l'outil comporte une butée (40) adaptée à des fins de réduction ou d'élimination de la tension superficielle entre l'outil d'ébavurage et la mèche quand l'outil d'ébavurage est dans la position rétractée, la butée étant mise en oeuvre sous la forme d'une partie saillante (40) sur la surface d'un évidement (20) dans la mèche contre laquelle l'outil d'ébavurage (14) vient reposer quand il est dans l'état rétracté.

2. Outil de coupe selon la revendication 1, dans lequel l'outil d'ébavurage est en mesure de se déplacer librement entre les positions étendue et rétractée.

3. Outil de coupe selon la revendication 1 ou la revendication 2, dans lequel l'outil d'ébavurage est monté sur la mèche au niveau d'une position qui permet à l'outil d'ébavurage d'être déplacé entre les positions étendue et rétractée, au cours de la rotation de l'outil de coupe, uniquement sous l'effet de la force centrifuge.

4. Outil de coupe selon l'une quelconque des revendications précédentes, dans lequel l'outil d'ébavurage est monté de manière pivotante sur la mèche.

5. Outil de coupe selon l'une quelconque des revendications précédentes, dans lequel l'outil d'ébavurage est logé au moins partiellement à l'intérieur de l'évidement quand il est dans la position rétractée.

6. Outil de coupe selon l'une quelconque des revendications précédentes, dans lequel l'outil d'ébavurage comporte une tête de coupe (28) et un axe (30) fixé sur ou formé d'une seule pièce avec la tête de coupe, axe sur lequel l'outil d'ébavurage est en mesure de pivoter entre les positions rétractée et étendue.

7. Outil de coupe selon l'une quelconque des revendications précédentes, comportant un cadre (22) assujetti sur la mèche et assujettissant l'outil d'ébavurage sur la mèche.

8. Outil de coupe selon la revendication 7, dans lequel le cadre définit un palier pour l'axe de l'outil d'ébavurage.

9. Outil de coupe selon l'une quelconque des revendications précédentes, dans lequel l'outil d'ébavurage est retenu de manière libérable sur la mèche.

10. Outil de coupe selon l'une quelconque des revendications précédentes, dans lequel l'outil d'ébavurage et/ou la mèche sont adaptés pour induire un écoulement d'air devant l'outil d'ébavurage pour faciliter le déplacement de l'outil d'ébavurage entre les positions rétractée et étendue.

11. Outil de coupe selon l'une quelconque des revendications 6 à 10, dans lequel l'axe comporte au moins une extrémité (36) qui est façonnée pour réduire le frottement entre l'axe et une surface avec laquelle l'axe est en contact.

12. Outil de coupe selon la revendication 11, dans lequel ladite au moins une extrémité (36) de l'axe est sensiblement hémisphérique.

13. Outil de coupe selon l'une quelconque des revendications précédentes, dans lequel l'outil d'ébavurage est façonné et dimensionné pour générer, en réponse au déplacement d'air relatif devant l'outil d'ébavurage au cours de la rotation de l'outil de coupe, une force aérodynamique agissant à des fins de déplacement de l'outil d'ébavurage vers la position étendue.
